# EUROPEAN PATENT SPECIFICATION

(11) **EP 3 617 822 B1**
(45) Date of publication and mention of the grant of the patent: **30.06.2021**
(21) Application number: 17907599.9
(22) Date of filing: 07.07.2017
(51) Int. Cl.: G05B 15/02, B28B 17/00

(54) **CONTROL METHOD OF GYPSUM BOARD SHAPING SYSTEM**
VERFAHREN ZUR STEUERUNG EINES GIPSPLATTENFORMUNGSSYSTEMS
PROCÉDÉ DE COMMANDE DE SYSTÈME DE FAÇONNAGE DE PLAQUE DE PLÂTRE

(30) Priority: 24.04.2017 CN 201710269748
(43) Date of publication of application: 04.03.2020
(73) Proprietor: Beijing New Building Materials Public Limited Company, Beijing 102209 (CN)
(72) Inventor: XIN, Wei, Beijing 102209 (CN); WANG, Huigang, Beijing 102209 (CN); TANG, Dayong, Beijing 102209 (CN); FENG, Liang, Beijing 102209 (CN); WANG, Peng, Beijing 102209 (CN); ZHANG, Ce, Beijing 102209 (CN); YU, Tieliang, Beijing 102209 (CN); LI, Desheng, Beijing 102209 (CN); ZHANG, Hongxu, Beijing 102209 (CN); WANG, Haidong, Beijing 102209 (CN)
(74) Representative: Murgitroyd & Company
(86) International application number: PCT/CN2017/092163
(87) International publication number: WO 2018/196165

(56) References cited:
- EP-A2- 0 422 833
- CN-A- 102 873 745
- CN-A- 105 425 734
- CN-U- 204 149 333
- CN-U- 204 700 978
- CN-U- 205 442 056
- JP-A- 2006 293 424
- US-A1- 2015 094 839

## Description

The present application claims a priority of the Chinese Patent Application No. 201710269748.5, entitled "Control Method of Gypsum Board Shaping System", filed to the CNIPA on Apr. 24, 2017.

### Technical Field

The present invention relates to a technical field of gypsum board manufacture, in particular to a technical field of a gypsum board forming system.

### Background

A forming process of a gypsum board is the most important stage in a production process of the gypsum board; however a machine halt often occurs due to a break of paper or a failure of an apparatus. Before power-on of the apparatus each time, a feeding approach of dry and wet materials and parameters such as a speed of a forming belt need to be adjusted manually. The speed of the forming belt is slow when the apparatus is just powered on, and it needs to be adjusted to a faster speed required by production according to an amount of gypsum mixed and stirred. However, a stable increase of speed cannot be accomplished in the prior art. In a process of adjusting the speed of the forming belt, due to an excessively fast increase of the speed of the belt, phenomena such as a break of protective surface paper, tensioning break of gypsum board, and slurry leakage often occur, product quality is seriously affected, a yield of production investment and indexes of various raw materials are affected as well, and production cost of an enterprise is increased

The document US2015094839A1 discloses a system, which is used to control a line speed of a conveyor belt of a conveyor system during product changeovers in a wallboard production line.

### Summary

In response to above problems, the object of the present invention is to provide a power-on method for solving any of the above problems according to claim 1. Specifically, the present invention provides a control method of a gypsum board forming system, which can be smoothly and quickly implemented. Further improvements and embodiments are provided in the dependent claims.

Also provided is a control method of a gypsum board forming system. The gypsum board forming system includes an operation screen, a central processor, a wet material adding device, a dry material adding device, a mixer and a forming device; wherein the operation screen, the wet material adding device, the dry material adding device, the mixer and the forming device are all electrically connected with the central processor.

Herein the wet material adding device includes a foaming agent tank, a foaming agent motor, a pulp water tank, a pulp water motor, a pulp water flowmeter, a stirring water tank, a stirring water motor and a stirring water flowmeter; wherein the foaming agent motor is connected with the foaming agent tank, the pulp water motor is connected with the pulp water tank, the pulp water flowmeter is located at a discharge outlet of the pulp water tank and is electrically connected with the central processor; the stirring water motor is connected with the stirring water tank, the stirring water flowmeter is located at a discharge outlet of the stirring water tank and is electrically connected with the central processor; furthermore, the foaming agent motor, the pulp water motor and the stirring water motor are all electrically connected with the central processor, and the foaming agent tank, the pulp water tank and the stirring water tank all communicate with the mixer.

Herein the dry material adding device includes a gypsum powder tank, an gypsum powder motor, a belt scale, a mixing device, a mixing reamer, a starch tank and a starch motor; wherein the gypsum powder motor, the belt scale, the mixing reamer and the starch motor are all electrically connected with the central processor, the gypsum powder motor is connected with the gypsum powder tank, the starch motor is connected with the starch tank, the gypsum powder tank communicates with the mixing device through the belt scale, the starch tank communicates with the mixing device, and the mixing device communicates with the mixer, and the mixing reamer is located inside the mixing device.

Herein the forming device includes a forming station, an infrared detector, a forming plate, a forming belt, a forming belt motor and a paper guide roller; wherein the mixer communicates with the forming station, the infrared detector is arranged above the forming station, the forming belt is arranged in parallel with the forming station, the paper guide roller is located above the forming belt, and the infrared detector, the forming belt motor and the paper guide roller are all electrically connected with the central processor.

The control method of the gypsum board forming system includes the following acts:
1) when receiving a power-on signal, the operation screen transmits the power-on signal to the central processor;
2) the central processor controls the mixer and the infrared detector to start, and controls the forming belt motor to run at a preset initial rotating speed;
3) the central processor controls the wet material adding device and the dry material adding device to start in sequence;
4) the central processor controls the mixer to open a discharge outlet, when the mixer opens the discharge outlet for a first preset time length, the central processor controls the forming plate to reach a working position, and when the forming plate remains at the working position for a second preset time length, the central processor controls the paper guide roller to reach a working position;
5) when detecting that a thickness of gypsum slurry on the forming station reaches a preset thickness threshold, the infrared detector sends a notification signal to the central processor, and upon receiving the notification signal, the central processor controls a rotating speed of the forming belt motor to increase uniformly from the preset initial rotating speed to a preset production rotating speed.

The act 3) in the above method includes the following 31) and 32).
31) The central processor controls the foaming agent motor, the pulp water motor and the stirring water motor to start, and receives an addition amount of pulp water sent by the pulp water flowmeter and an addition amount of stirring water sent by the stirring water flowmeter in real time.
32) When the addition amount of the pulp water is greater than or equal to a preset addition amount threshold of the pulp water and the addition amount of the stirring water is greater than or equal to a preset addition amount threshold of the stirring water, the central processor controls the dry material adding device to start.

Herein, the central processor controlling the dry material adding device to start includes: controlling the mixing reamer, the starch motor, the belt scale and the gypsum powder motor to start in sequence or at the same time.

Herein, the preset addition amount threshold of the pulp water is greater than or equal to 6 tons, and the preset addition amount threshold of the stirring water is greater than or equal to 2 tons.

The first preset time length is 8 to 12 seconds.

The second preset time length is 5 to 8 seconds.

A moving speed of the belt corresponding to the preset initial rotating speed is 15-25 meters/min, and a moving speed of the belt corresponding to the preset production rotating speed is 45-60 meters/min.

According to the control method of the gypsum board forming system provided by the present invention, through a close coordination between material discharge time of dry materials and material discharge time of wet materials, the speed of the forming belt is automatically increased, and the forming belt reaches an ideal stable state according to an amount of gypsum stirred by a mixer. The technical problems such as a break of protective surface paper caused by an excessively fast increase of the speed of the belt due to unstable manual adjustment of the speed of the forming belt, roughness of the protective surface paper of the gypsum board caused by a nonuniform speed of contact between the gypsum board and the belt are solved. The production process of the gypsum board and various indexes of products are optimized, a smooth progress of the production process is ensured, and production cost of the gypsum board is effectively reduced.

Reading following descriptions of exemplary embodiments with reference to accompanying drawings, other characteristic features and advantages of the present invention will become apparent.

### Brief Description of Drawings

The accompanying drawings, which are incorporated in and constitute a part of the specification, illustrate embodiments of the present invention, and the accompanying drawings together with the description are used to explain principles of the present invention. In these drawings, like reference numerals are used to indicate like elements.
FIG. 1 illustratively shows a schematic structural diagram of a gypsum board forming system according to the present invention.
FIG. 2 illustratively shows an electrical connection diagram of a gypsum board forming system according to the present invention.

### Detailed Description

In order to make purposes, technical solutions and advantages of embodiments of the present invention clearer, the technical solutions in the embodiments of the present invention will be clearly and completely described below with reference to the drawings in the embodiments of the present invention.

The invention provides a control method of a gypsum board forming system to ensure a smooth start of the gypsum board forming system, accomplish a stable increase of a speed of a forming belt, and reduce a series of losses caused by improper start of the system.

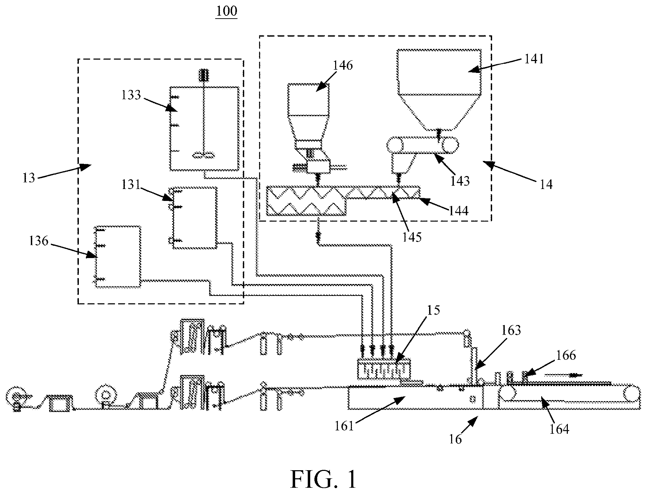

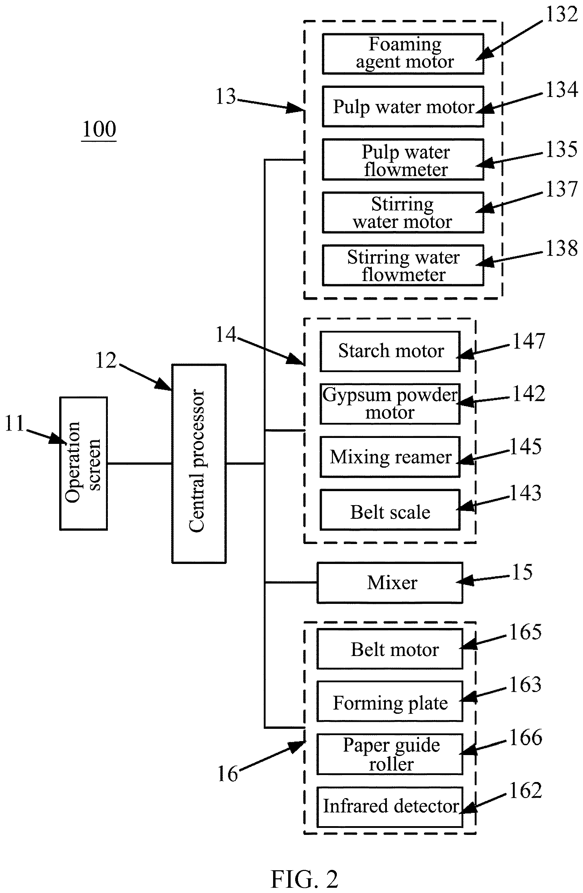

FIG. 1 shows a schematic structural diagram of an embodiment of a gypsum board forming system, and FIG. 2 shows an electrical connection diagram of the gypsum board forming system. Refer to FIG. 1 and FIG. 2, the gypsum board forming system 100 includes an operation screen 11, a central processor 12, a wet material adding device 13 and a dry material adding device 14, a mixer 15 and a forming device 16. The operation screen 11, the wet material adding device 13, the dry material adding device 14, the mixer 15 and the forming device 16 are all electrically connected with the central processor 12. The operation screen 11 is used for performing start and stop operations and the like, and an operation progress of the gypsum board forming system 100 can also be checked at any time. The central processor 12 is a signal hub and a control processing center of the gypsum board forming system 100, and may not only transmit signals and issue commands, but also control the start and stop and a running process of a corresponding device according to different signals and information. The wet material adding device 13 and the dry material adding device 14 are used for respectively adding to the mixer 15 wet materials and dry materials for preparing gypsum boards. The wet materials and the dry materials are mixed uniformly and output by the mixer 15 to the forming device 16 for gypsum board forming, under a control of the central processor 12.

Specifically, the operation screen 11 may be a touch screen or various combinations of a common visual screen and an operation keyboard, which may be selected and set by a user according to different usage environments and conditions. The central processor 12 may be a PLC controller.

Specifically, the wet material adding device 13 includes a foaming agent tank 131, a foaming agent motor 132, a pulp water tank 133, a pulp water motor 134, a pulp water flowmeter 135, a stirring water tank 136, a stirring water motor 137, and a stirring water flowmeter 138. The foaming agent motor 132 is connected to the foaming agent tank 131. The pulp water motor 134 is connected with the pulp water tank 133, the pulp water flowmeter 135 is located at a discharge outlet of the pulp water tank 133 and is electrically connected with the central processor 12, and feeds back to the central processor 12 an amount of pulp water added to the mixer 15 in real time. On one hand, the central processor 12 controls additions of other wet materials and dry materials, running of the forming device and the like according to a value fed back by the pulp water flowmeter 135. On the other hand, the central processor 12 may compare the value fed back by the pulp water flowmeter 135 with a volume of the pulp water tank 133 pre-stored in the central processor 12, and when a difference between the volume of the pulp water tank 133 and the value fed back by the pulp water flowmeter 135 is less than a preset value, the central processor 12 gives an alarm or automatically controls to replenish pulp water into the pulp water tank 133.

The stirring water motor 137 is connected with the stirring water tank 136, the stirring water flowmeter 138 is located at a discharge outlet of the stirring water tank 136 and is electrically connected with the central processor 12, and feeds back to the central processor 12 an amount of stirring water added to the mixer 15 in real time. On one hand, the central processor 12 controls additions of other wet materials and dry materials, running of the forming device and the like according to a value fed back by the stirring water flowmeter 138. On the other hand, the central processor 12 may compare the value fed back by the stirring water flowmeter 138 with a volume of the stirring water tank 136 pre-stored in the central processor 12, and when a difference between the volume of the stirring water tank 136 and the value fed back by the stirring water flowmeter 138 is less than a preset value, the central processor 12 gives an alarm or automatically controls to replenish stirring water into the stirring water tank 136.

The foaming agent motor 132, the pulp water motor 134 and the stirring water motor 137 are all electrically connected with the central processor 12, and adding processes of the foaming agent, the pulp water and the stirring water are controlled by the central processor 12. The foaming agent tank 131, the pulp water tank 133 and the stirring water tank 136 all communicate with the mixer 15, so that the foaming agent, the pulp water and the stirring water may all be directly conveyed into the mixer 15 for mixing and stirring.

Specifically, the dry material adding device 14 includes a gypsum powder tank 141, a gypsum powder motor 142, a belt scale 143, a mixing device 144, a mixing reamer 145, a starch tank 146 and a starch motor 147. The gypsum powder motor 142, the belt scale 143, the mixing reamer 145 and the starch motor 147 are all electrically connected with the central processor 12, and start, stop and a running process of the dry material adding device 14 are controlled by the central processor 12. The gypsum powder motor 142 is connected with the gypsum powder tank 141, the starch motor 147 is connected with the starch tank 146, the gypsum powder tank 141 communicates with the mixing device 144 through the belt scale 143, the starch tank 146 communicates with the mixing device 144, the mixing device 144 communicates with the mixer 15, and the mixing reamer 145 is located inside the mixing device 144. The central processor 12 controls the gypsum powder motor 142, the belt scale 143 and the mixing reamer 145 to start, and opens a discharge outlet of the gypsum powder tank 141, conveys the gypsum powder into the mixing device 144 through the belt scale 143. At the same time, the central processor 12 controls opening of a discharge outlet of the starch tank 146, starts the starch motor 147 to convey starch into the mixing device 144. The gypsum powder and the starch are mixed through the mixing reamer 145 and conveyed into the mixing device 15 to be mixed with wet materials, and then conveyed to the forming device 16 for gypsum board forming.

Specifically, the forming device 16 includes a forming station 161, an infrared detector 162, a forming plate 163, a forming belt 164, a forming belt motor 165, and a paper guide roller 166. The mixer 15 communicates with the forming station 161, and the mixer 15 fully mixes dry materials and wet materials to form gypsum slurry and directly conveys the gypsum slurry to the forming station 161 for preparing forming. The infrared detector 162 is arranged above the forming station 161 to detect a thickness of gypsum slurry in the forming station 161 and feed back a detection result to the central processor 12 in real time. The forming belt 164 is arranged in parallel with the forming station 161, and gypsum slurry reaching the forming station 161 may be directly accumulated on the forming belt 164. When the thickness of the gypsum slurry reaches a predetermined thickness, the forming belt motor 165 is started to drive the forming belt 164 to run at an initial speed.

The paper guide roller 166 is located above the forming belt 164. The infrared detector 162, the forming belt motor 165 and the paper guide roller 166 are all electrically connected with the central processor 12. Lower protective surface paper and Upper protective surface paper are led to the forming belt 164, the upper protective surface paper and the lower protective surface paper are driven to move by friction between the forming belt 164 and the paper guide roller 166, and the gypsum slurry is wrapped between the upper protective surface paper and the lower protective surface paper, then the paper guide roller 166 is lifted and the forming plate 163 is dropped, a gypsum board is then formed.

A control method of the gypsum board forming system 100 provided by the present invention includes the following acts:
1) When receiving a power-on signal, the operation screen 11 transmits the power-on signal to the central processor 12.
2) The central processor 12 controls the mixer 15 and the infrared detector 162 to start, and controls the forming belt motor 165 to run at a preset initial rotating speed.
3) The central processor 12 controls the wet material adding device 13 and the dry material adding device 14 to start in sequence.
4) The central processor 12 controls the mixer 15 to open a discharge outlet; when the mixer 15 opens the discharge outlet for a first preset time length, the central processor 12 controls the forming plate 163 to reach a working position, and when the forming plate 163 remains at the working position for a second preset time length, the central processor 12 controls the paper guide roller 166 to reach a working position.
5) When detecting that a thickness of the gypsum slurry on the forming station 161 reaches a preset thickness threshold, the infrared detector 162 sends a notification signal to the central processor 12. Upon receiving the notification signal, the central processor 12 controls a rotating speed of the forming belt motor 165 to increase uniformly from the preset initial rotating speed to a preset production rotating speed.

In the above method, the act 3) includes 31) and 32).
31) The central processor 12 controls the foaming agent motor 132, the pulp water motor 134 and the stirring water motor 137 to start, and receives an addition amount of pulp water sent by the pulp water flowmeter 135 and an addition amount of stirring water sent by the stirring water flowmeter 138 in real time.
32) When the addition amount of the pulp water is greater than or equal to a preset addition amount threshold of the pulp water and the addition amount of the stirring water is greater than or equal to a preset addition amount threshold of the stirring water, the central processor 12 controls the dry material adding device 14 to start.

Herein, controlling, by the central processor 12, the dry material adding device 14 to start includes: controlling the mixing reamer 145, the starch motor 147, the belt scale 143, and the gypsum powder motor 142 to start in sequence or at the same time.

Specifically, the preset addition amount threshold of the pulp water is greater than or equal to 6 tons, and the preset addition amount threshold of the stirring water is greater than or equal to 2 tons, and the first preset time length is 8 to 12 seconds and the second preset time length is 5 to 8 seconds.

Specifically, a moving speed of the belt corresponding to the preset initial rotating speed is 15 to 25 meters per minute, and a moving speed of the belt corresponding to the preset production rotating speed is 45 to 60 meters per minute.

Specifically, the preset thickness threshold of the gypsum slurry thickness is set according to an actual required thickness of a gypsum board, and needs to be greater than a thickness of a gypsum board required by production, for example, the preset thickness threshold may be 80 to 100 millimeters.

### Embodiment 1

Preset parameters are input into the central processor 12. The preset parameters include: a preset initial speed of the belt 20m/min, a production speed of the belt 50m/min, an addition amount threshold of the pulp water 6 tons, an addition amount threshold of the stirring water 2 tons, a first preset time length 10s, a second preset time length 6s, and a preset thickness threshold of the gypsum slurry 80mm. After confirming that raw materials in each wet material container and dry material container are sufficient, a power-on button is started on the operation screen 11.
1) When receiving a power-on signal, the operation screen 11 transmits the power-on signal to the central processor 12.
2) The central processor 12 controls the mixer 15 and the infrared detector 162 to start, and controls the forming belt motor 165 to drive the forming belt 164 to run at a speed of 20 m/min.
31) The central processor 12 controls the foaming agent motor 132, the pulp water motor 134 and the stirring water motor 137 to start, and receives an addition amount of pulp water sent by the pulp water flowmeter 135 and an addition amount of stirring water sent by the stirring water flowmeter 138 in real time.
32) When the addition amount of the pulp water is greater than or equal to 6 tons and the addition amount of the stirring water is greater than or equal to 2 tons, the central processor 12 controls the mixing reamer 145, the starch motor 147, the belt scale 143, and the gypsum powder motor 142 to start in sequence or at the same time.
4) The central processor 12 controls the mixer 15 to open a discharge outlet. When the mixer 15 opens the discharge outlet for 10s, the central processor 12 controls the forming plate 163 to reach a working position, and when the forming plate 163 remains at the working position for 6s, the central processor 12 controls the paper guide roller 166 to reach a working position.
5) When detecting that a thickness of gypsum slurry on the forming station 161 reaches 80mm, the infrared detector 162 sends a notification signal to the central processor 12. Upon receiving the notification signal, the central processor 12 controls a rotating speed of the forming belt motor 165 to increase uniformly, so that a moving speed of the forming belt 164 increases uniformly from 20m/min to 50m/min. That is, the central processor 12 controls the forming belt motor 165 to increase uniformly the speed. For example, the process may be controlled by a frequency converter.

According to the control method of the gypsum board forming system of the present invention, through a close coordination between material discharge time of dry materials and material discharge time of wet materials, the forming belt is controlled to automatically and stably increase the speed according to a thickness of the gypsum slurry reaching the forming station, avoiding quality problems such as a break of protective surface paper, roughness of the protective surface paper of the gypsum board and the like caused by an excessively fast acceleration of the belt, and ensuring a smooth progress of a forming process of the gypsum board, and effectively reduce production cost.

Contents described above may be implemented separately or in various combinations, within the scope of the appended claims.

It should be noted that in this document, relational terms such as first and second, etc. are only used to distinguish one entity or operation from another entity or operation, and do not necessarily require or imply any such actual relationship or order existed between these entities or operations. Moreover, terms "comprise," "include," or any other variation thereof, are intended to cover a non-exclusive inclusion, such that an article or device that includes a series of elements includes not only those elements, but also other elements not expressly listed, or elements inherent to such article or device. Without further restrictions, an element defined by a statement "includes" does not exclude a presence of another same element in an article or device that includes the element.

The above embodiment is only used to illustrate, but not to limit, a technical solution of the present invention, and the present invention is only described in detail with reference to the preferred embodiment. A person of ordinary skill in the art should understand that the technical solution of the present invention may be modified or equivalently substituted, within the scope of the appended claims.

### Industrial Applicability

In the present invention, through a close coordination between material discharge time of dry materials and material discharge time of wet materials in a production process of a gypsum board, a speed of a forming belt is automatically increased and the forming belt reaches an ideal stable state according to an amount of gypsum mixed and stirred. The technical problems such as a break of a protective surface paper caused by an excessively fast increase of the speed of the belt due to unstable manual adjustment of the speed of the forming belt, roughness of the protective surface paper of the gypsum board caused by a nonuniform speed of contact between the gypsum board and the belt are solved. The production process of the gypsum board and various indexes of products are optimized, a smooth progress of the production process is ensured, and production cost of the gypsum board is effectively reduced.

## Claims

1. A control method of a gypsum board forming system, wherein the gypsum board forming system (100) comprises an operation screen (11), a central processor (12), a wet material adding device (13), a dry material adding device (14), a mixer (15) and a forming device (16), wherein the operation screen (11), the wet material adding device (13), the dry material adding device (14), the mixer (15) and the forming device (16) are all electrically connected with the central processor (12);
wherein the wet material adding device (13) comprises a foaming agent tank (131), a foaming agent motor (132), a pulp water tank (133), a pulp water motor (134), a pulp water flowmeter (135), a stirring water tank (136), a stirring water motor (137) and a stirring water flowmeter (138), wherein the foaming agent motor (132) is connected with the foaming agent tank (131), the pulp water motor (134) is connected with the pulp water tank (133), the pulp water flowmeter (135) is located at a discharge outlet of the pulp water tank (133) and is electrically connected with the central processor (12); the stirring water motor (137) is connected with the stirring water tank (136), the stirring water flowmeter (138) is located at a discharge outlet of the stirring water tank (136) and is electrically connected with the central processor (12); and the foaming agent motor (132), the pulp water motor (134) and the stirring water motor (137) are all electrically connected with the central processor (12), the foaming agent tank (131), the pulp water tank (133) and the stirring water tank (136) all communicate with the mixer (15);
wherein the dry material adding device (14) comprises a gypsum powder tank (141), a gypsum powder motor (142), a belt scale (143), a mixing device (144), a mixing reamer (145), a starch tank (146) and a starch motor (147); wherein the gypsum powder motor (142), the belt scale (143), the mixing reamer (145) and the starch motor (147) are all electrically connected with the central processor (12); the gypsum powder motor (142) is connected with the gypsum powder tank (141), the starch motor (147) is connected with the starch tank (146); the gypsum powder tank (141) communicates with the mixing device (144) through the belt scale (143), the starch tank (146) communicates with the mixing device (144), the mixing device (144) communicates with the mixer (15), and the mixing reamer (145) is located inside the mixing device (144);
wherein the forming device (16) comprises a forming station (161), an infrared detector (162), a forming plate (163), a forming belt (164), a forming belt motor (165) and a paper guide roller (166), the mixer (15) communicates with the forming station (161), the infrared detector (162) is arranged above the forming station (161), the forming belt (164) is arranged in parallel with the forming station (161), the paper guide roller (166) is located above the forming belt (164), and the infrared detector (162), the forming belt motor (165) and the paper guide roller (166) are all electrically connected with the central processor (12);
the control method of the gypsum board forming system comprises the following acts:
1) when receiving a power-on signal, transmitting, by the operation screen (11), the power-on signal to the central processor (12);
2) controlling, by the central processor (12), the mix (15) and the infrared detector (162) to start, and controlling the forming belt motor (165) to run at a preset initial rotating speed;
3) controlling, by the central processor (12), the wet material adding device (13) and the dry material adding device (14) to start in sequence;
4) controlling, by the central processor (12), the mixer (15) to open a discharge outlet; when the mixer (15) opens the discharge outlet for a first preset time length, controlling, by the central processor (12), the forming plate (163) to reach a working position; and when the forming plate (163) remains at the working position for a second preset time length, controlling, by the central processor (12), the paper guide roller (166) to reach a working position;
5) when the infrared detector (162) detects that a thickness of gypsum slurry on the forming station (161) reaches a preset thickness threshold, sending, by the infrared detector (162), a notification signal to the central processor (12); upon the central processor (12) receives the notification signal, controlling, by the central processor (12), a rotating speed of the forming belt motor (165) to increase uniformly from the preset initial rotating speed to a preset production rotating speed;
wherein the first preset time length is 8 to 12 seconds, the second preset time length is 5 to 8 seconds, a moving speed of the belt corresponding to the preset initial rotating speed is 15 to 25 meters per minute.

2. The control method of claim 1, wherein the act 3) comprises:
31) controlling, by the central processor (12), the foaming agent motor (132), the pulp water motor (134) and the stirring water motor (137) to start, and receiving an addition amount of pulp water sent by the pulp water flowmeter (135) and an addition amount of stirring water sent by the stirring water flowmeter (138) in real time;
32) when the addition amount of the pulp water is greater than or equal to a preset addition amount threshold of the pulp water and the addition amount of the stirring water is greater than or equal to a preset addition amount threshold of the stirring water, controlling, by the central processor (12), the dry material addition device (14) to start.

3. The control method of claim 2, wherein controlling, by the central processor (12), the dry material adding device (14) to start, comprises:
controlling the mixing reamer (145), the starch motor (147), the belt scale (143) and the gypsum powder motor (142) to start in sequence or at the same time.

4. The control method of claim 2 or 3, wherein the preset addition amount threshold of the pulp water is greater than or equal to 6 tons, and the preset addition amount threshold of the stirring water is greater than or equal to 2 tons.

5. The control method of claim 1, wherein a moving speed of the belt corresponding to the preset production rotating speed is 45 to 60 meters per minute.

## Patentansprüche

1. Ein Verfahren zur Steuerung eines Gipsplattenformungssystems, wobei das Gipsplattenformungssystem (100) einen Bedienbildschirm (11), einen zentralen Prozessor (12), eine Zugabevorrichtung (13) für feuchtes Material, eine Zugabevorrichtung (14) für trockenes Material, einen Mischer (15) und eine Formungsvorrichtung (16) beinhaltet, wobei der Bedienbildschirm (11), die Zugabevorrichtung (13) für feuchtes Material, die Zugabevorrichtung (14) für trockenes Material, der Mischer (15) und die Formungsvorrichtung (16) alle mit dem zentralen Prozessor (12) elektrisch verbunden sind;
wobei die Zugabevorrichtung (13) für feuchtes Material einen Schäumungsmittelbehälter (131), einen Schäumungsmittelmotor (132), einen Faserstoff-Wasser-Behälter (133), einen Faserstoff-Wasser-Motor (134), einen Faserstoff-Wasser-Durchflussmesser (135), einen Rührwasserbehälter (136), einen Rührwassermotor (137) und einen Rührwasserdurchflussmesser (138) beinhaltet, wobei der Schäumungsmittelmotor (132) mit dem Schäumungsmittelbehälter (131) verbunden ist, der Faserstoff-Wasser-Motor (134) mit dem Faserstoff-Wasser-Behälter (133) verbunden ist, sich der Faserstoff-Wasser-Durchflussmesser (135) an einer Auslassöffnung des Faserstoff-Wasser-Behälters (133) befindet und mit dem zentralen Prozessor (12) elektrisch verbunden ist; der Rührwassermotor (137) mit dem Rührwasserbehälter (136) verbunden ist, sich der Rührwasserdurchflussmesser (138) an einer Auslassöffnung des Rührwasserbehälters (136) befindet und mit dem zentralen Prozessor (12) elektrisch verbunden ist; und der Schäumungsmittelmotor (132), der Faserstoff-Wasser-Motor (134) und der Rührwassermotor (137) alle mit dem zentralen Prozessor (12) elektrisch verbunden sind, der Schäumungsmittelbehälter (131), der Faserstoff-Wasser-Behälter (133) und der Rührwasserbehälter (136) alle mit dem Mischer (15) kommunizieren;
wobei die Zugabevorrichtung (14) für trockenes Material einen Gipspulverbehälter (141), einen Gipspulvermotor (142), eine Bandwaage (143), eine Mischvorrichtung (144), einen Mischräumer (145), einen Stärkebehälter (146) und einen Stärkemotor (147) beinhaltet; wobei der Gipspulvermotor (142), die Bandwaage (143), der Mischräumer (145) und der Stärkemotor (147) alle mit dem zentralen Prozessor (12) elektrisch verbunden sind; der Gipspulvermotor (142) mit dem Gipspulverbehälter (141) verbunden ist, der Stärkemotor (147) mit dem Stärkebehälter (146) verbunden ist; der Gipspulverbehälter (141) über die Bandwaage (143) mit der Mischvorrichtung (144) kommuniziert, der Stärkebehälter (146) mit der Mischvorrichtung (144) kommuniziert, die Mischvorrichtung (144) mit dem Mischer (15) kommuniziert und sich der Mischräumer (145) innerhalb der Mischvorrichtung (144) befindet;
wobei die Formungsvorrichtung (16) eine Formungsstation (161), einen Infrarotdetektor (162), eine Formungsplatte (163), ein Formungsband (164), einen Formungsbandmotor (165) und eine Papierführungswalze (166) beinhaltet, der Mischer (15) mit der Formungsstation (161) kommuniziert, der Infrarotdetektor (162) oberhalb der Formungsstation (161) angeordnet ist, das Formungsband (164) parallel zu der Formungsstation (161) angeordnet ist, sich die Papierführungswalze (166) oberhalb des Formungsbands (164) befindet und der Infrarotdetektor (162), der Formungsbandmotor (165) und die Papierführungswalze (166) alle mit dem zentralen Prozessor (12) elektrisch verbunden sind;
wobei das Verfahren zur Steuerung des Gipsplattenformungssystems die folgenden Schritte beinhaltet:
1) beim Empfangen eines Einschaltsignals, Übertragen, durch den Bedienbildschirm (11), des Einschaltsignals an den zentralen Prozessor (12);
2) Steuern, durch den zentralen Prozessor (12), der Mischung (15) und des Infrarotdetektors (162), damit diese starten, und Steuern des Formungsbandmotors (165), damit dieser mit einer voreingestellten Anfangsdrehzahl läuft;
3) Steuern, durch den zentralen Prozessor (12), der Zugabevorrichtung (13) für feuchtes Material und der Zugabevorrichtung (14) für trockenes Material, damit diese nacheinander starten;
4) Steuern, durch den zentralen Prozessor (12), des Mischers (15), damit dieser eine Auslassöffnung öffnet; wenn der Mischer (15) die Auslassöffnung für einen ersten voreingestellten Zeitraum öffnet, Steuern, durch den zentralen Prozessor (12), der Formungsplatte (163), damit diese eine Arbeitsposition erreicht; und wenn die Formungsplatte (163) für einen zweiten voreingestellten Zeitraum in der Arbeitsposition bleibt, Steuern, durch den zentralen Prozessor (12), der Papierführungswalze (166), damit diese eine Arbeitsposition erreicht;
5) wenn der Infrarotdetektor (162) detektiert, dass eine Dicke eines Gipsbreis auf der Formungsstation (161) einen voreingestellten Dickenschwellenwert erreicht hat, Schicken, durch den Infrarotdetektor (162), eines Benachrichtigungssignals an den zentralen Prozessor (12); nach dem Empfangen, durch den zentralen Prozessor (12), des Benachrichtigungssignals, Steuern, durch den zentralen Prozessor (12), einer Drehzahl des Formungsbandmotors (165), um die voreingestellte Anfangsdrehzahl gleichmäßig auf eine voreingestellte Produktionsdrehzahl zu erhöhen;
wobei der erste voreingestellte Zeitraum 8 bis 12 Sekunden beträgt, der zweite voreingestellte Zeitraum 5 bis 8 Sekunden beträgt, eine Bewegungsgeschwindigkeit des Bands, die der voreingestellten Anfangsdrehzahl entspricht, 15 bis 25 Meter pro Minute beträgt.

2. Steuerungsverfahren gemäß Anspruch 1, wobei der Schritt 3) Folgendes beinhaltet:
31) Steuern, durch den zentralen Prozessor (12), des Schäumungsmittelmotors (132), des Faserstoff-Wasser-Motors (134) und des Rührwassermotors (137), damit diese starten, und Empfangen, in Echtzeit, einer Faserstoff-Wasser-Zusatzmenge, die von dem Faserstoff-Wasser-Durchflussmesser (135) geschickt wird, und einer Rührwasserzusatzmenge, die von dem Rührwasserdurchflussmesser (138) geschickt wird;
32) wenn die Faserstoff-Wasser-Zusatzmenge größer als oder gleich einem voreingestellten Schwellenwert für die Faserstoff-Wasser-Zusatzmenge ist und die Rührwasserzusatzmenge größer als oder gleich einem voreingestellten Schwellenwert für die Rührwasserzusatzmenge ist, Steuern, durch den zentralen Prozessor (12), der Zugabevorrichtung (14) für trockenes Material, damit diese startet.

3. Steuerungsverfahren gemäß Anspruch 2, wobei das Steuern, durch den zentralen Prozessor (12), der Zugabevorrichtung (14) für trockenes Material, damit diese startet, Folgendes beinhaltet:
Steuern des Mischräumers (145), des Stärkemotors (147), der Bandwaage (143) und des Gipspulvermotors (142), damit diese nacheinander oder gleichzeitig starten.

4. Steuerungsverfahren gemäß Anspruch 2 oder 3, wobei der voreingestellte Schwellenwert für die Faserstoff-Wasser-Zusatzmenge größer als oder gleich 6 Tonnen ist und der voreingestellte Schwellenwert für die Rührwasserzusatzmenge größer als oder gleich 2 Tonnen ist.

5. Steuerungsverfahren gemäß Anspruch 1, wobei eine Bewegungsgeschwindigkeit des Bands, die der voreingestellten Produktionsdrehzahl entspricht, 45 bis 60 Meter pro Minute beträgt.

## Revendications

1. Un procédé de commande d'un système de formage de plaques de plâtre, dans lequel le système de formage de plaques de plâtre (100) comprend un écran d'exploitation (11), un processeur central (12), un dispositif d'ajout de matières humides (13), un dispositif d'ajout de matières sèches (14), un mélangeur (15) et un dispositif de formage (16), dans lequel l'écran d'exploitation (11), le dispositif d'ajout de matières humides (13), le dispositif d'ajout de matières sèches (14), le mélangeur (15) et le dispositif de formage (16) sont tous connectés électriquement au processeur central (12) ;
dans lequel le dispositif d'ajout de matières humides (13) comprend un réservoir d'agent moussant (131), un moteur d'agent moussant (132), un réservoir d'eau de pulpe (133), un moteur d'eau de pulpe (134), un débitmètre d'eau de pulpe (135), un réservoir d'eau de gâchage (136), un moteur d'eau de gâchage (137) et un débitmètre d'eau de gâchage (138), dans lequel le moteur d'agent moussant (132) est relié au réservoir d'agent moussant (131), le moteur d'eau de pulpe (134) est relié au réservoir d'eau de pulpe (133), le débitmètre d'eau de pulpe (135) est situé au niveau d'un orifice de sortie du réservoir d'eau de pulpe (133) et est connecté électriquement au processeur central (12) ; le moteur d'eau de gâchage (137) est relié au réservoir d'eau de gâchage (136), le débitmètre d'eau de gâchage (138) est situé au niveau d'un orifice de sortie du réservoir d'eau de gâchage (136) et est connecté électriquement au processeur central (12) ; et le moteur d'agent moussant (132), le moteur d'eau de pulpe (134) et le moteur d'eau de gâchage (137) sont tous connectés électriquement au processeur central (12), le réservoir d'agent moussant (131), le réservoir d'eau de pulpe (133) et le réservoir d'eau de gâchage (136) communiquent tous avec le mélangeur (15) ;
dans lequel le dispositif d'ajout de matières sèches (14) comprend un réservoir de poudre de plâtre (141), un moteur de poudre de plâtre (142), une balance à courroie (143), un dispositif de mélange (144), un racleur de mélange (145), un réservoir d'amidon (146) et un moteur d'amidon (147) ; dans lequel le moteur de poudre de plâtre (142), la balance à courroie (143), le racleur de mélange (145) et le moteur d'amidon (147) sont tous connectés électriquement au processeur central (12) ; le moteur de poudre de plâtre (142) est relié au réservoir de poudre de plâtre (141), le moteur d'amidon (147) est relié au réservoir d'amidon (146) ; le réservoir de poudre de plâtre (141) communique avec le dispositif de mélange (144) par l'intermédiaire de la balance à courroie (143), le réservoir d'amidon (146) communique avec le dispositif de mélange (144), le dispositif de mélange (144) communique avec le mélangeur (15), et le racleur de mélange (145) est situé à l'intérieur du dispositif de mélange (144) ;
dans lequel le dispositif de formage (16) comprend un poste de formage (161), un détecteur infrarouge (162), une plaque de formage (163), une courroie de formage (164), un moteur de courroie de formage (165) et un rouleau de guidage de carton (166), le mélangeur (15) communique avec le poste de formage (161), le détecteur infrarouge (162) est agencé au-dessus du poste de formage (161), la courroie de formage (164) est agencée en parallèle avec le poste de formage (161), le rouleau de guidage de carton (166) est situé au-dessus de la courroie de formage (164), et le détecteur infrarouge (162), le moteur de courroie de formage (165) et le rouleau de guidage de carton (166) sont tous connectés électriquement au processeur central (12) ;
le procédé de commande du système de formage de plaques de plâtre comprend les actions suivantes :
1) lors de la réception d'un signal de mise sous tension, la transmission, par l'écran d'exploitation (11), du signal de mise sous tension au processeur central (12) ;
2) la commande, par le processeur central (12), du mélange (15) et du détecteur infrarouge (162) pour qu'ils démarrent, et la commande du moteur de courroie de formage (165) pour qu'il tourne à une vitesse de rotation initiale prédéfinie ;
3) la commande, par le processeur central (12), du dispositif d'ajout de matières humides (13) et du dispositif d'ajout de matières sèches (14) pour qu'ils démarrent en séquence ;
4) la commande, par le processeur central (12), du mélangeur (15) pour qu'il ouvre un orifice de sortie ; lorsque le mélangeur (15) a ouvert l'orifice de sortie pendant une première durée prédéfinie, la commande, par le processeur central (12), de la plaque de formage (163) pour qu'elle atteigne une position de travail ; et lorsque la plaque de formage (163) reste à la position de travail pendant une deuxième durée prédéfinie, la commande, par le processeur central (12), du rouleau de guidage de carton (166) pour qu'il atteigne une position de travail ;
5) lorsque le détecteur infrarouge (162) détecte qu'une épaisseur de pâte de plâtre sur le poste de formage (161) atteint un seuil d'épaisseur prédéfini, l'envoi, par le détecteur infrarouge (162), d'un signal de notification au processeur central (12) ; par suite de la réception du signal de notification par le processeur central (12), la commande, par le processeur central (12), d'une vitesse de rotation du moteur de courroie de formage (165) pour qu'elle croisse uniformément de la vitesse de rotation initiale prédéfinie à une vitesse de rotation de production prédéfinie ;
dans lequel la première durée prédéfinie est de 8 à 12 secondes, la deuxième durée prédéfinie est de 5 à 8 secondes, une vitesse de déplacement de la courroie correspondant à la vitesse de rotation initiale prédéfinie est de 15 à 25 mètres par minute.

2. Le procédé de commande de la revendication 1, dans lequel l'action 3) comprend :
31) la commande, par le processeur central (12), du moteur d'agent moussant (132), du moteur d'eau de pulpe (134) et du moteur d'eau de gâchage (137) pour qu'ils démarrent, et la réception d'une quantité d'ajout d'eau de pulpe envoyée par le débitmètre d'eau de pulpe (135) et d'une quantité d'ajout d'eau de gâchage envoyée par le débitmètre d'eau de gâchage (138) en temps réel ;
32) lorsque la quantité d'ajout de l'eau de pulpe est supérieure ou égale à un seuil de quantité d'ajout prédéfini de l'eau de pulpe et que la quantité d'ajout de l'eau de gâchage est supérieure ou égale à un seuil de quantité d'ajout prédéfini de l'eau de gâchage, la commande, par le processeur central (12), du dispositif d'ajout de matières sèches (14) pour qu'il démarre.

3. Le procédé de commande de la revendication 2, dans lequel la commande, par le processeur central (12), du dispositif d'ajout de matières sèches (14) pour qu'il démarre, comprend :
la commande du racleur de mélange (145), du moteur d'amidon (147), de la balance à courroie (143) et du moteur de poudre de plâtre (142) pour qu'ils démarrent en séquence ou en même temps.

4. Le procédé de commande de la revendication 2 ou de la revendication 3, dans lequel le seuil de quantité d'ajout prédéfini de l'eau de pulpe est supérieur ou égal à 6 tonnes, et le seuil de quantité d'ajout prédéfini de l'eau de gâchage est supérieur ou égal à 2 tonnes.

5. Le procédé de commande de la revendication 1, dans lequel une vitesse de déplacement de la courroie correspondant à la vitesse de rotation de production prédéfinie est de 45 à 60 mètres par minute.
